# EUROPÄISCHE PATENTSCHRIFT

(11) **EP 0 541 016 B1**
(45) Veröffentlichungstag und Bekanntmachung des Hinweises auf die Patenterteilung: **12.06.1996**
(21) Anmeldenummer: 92118659.9
(22) Anmeldetag: 31.10.1992
(51) Int. Cl.: F02M 35/12, F02M 35/16, B60K 13/02

(54) **Luftansaugvorrichtung für eine Brennkraftmaschine**
Air intake device for an internal combustion engine
Dispositif d'aspiration d'air pour un moteur à combustion interne

(30) Priorität: 02.11.1991 DE 4136148; 22.02.1992 DE 4205425
(43) Veröffentlichungstag der Anmeldung: 12.05.1993
(73) Patentinhaber: IVECO MAGIRUS AG, D-89079 Ulm (DE)
(72) Erfinder: Rudolph, Heiner, W-8878 Bibertal/Bühl (DE); Mack, Dieter, W-7907 Langenau (DE); Six, Werner, W-7910 Neu-Ulm (DE)
(74) Vertreter: TER MEER - MÜLLER - STEINMEISTER & PARTNER

(56) Entgegenhaltungen:
- DE-A- 3 836 166
- DE-A- 3 942 595
- FR-A- 2 639 885
- GB-A- 2 011 273
- US-A- 4 971 172
- PATENT ABSTRACTS OF JAPAN vol. 11, no. 102 (M-576)31. März 1987 & JP-A-61 250 374

## Beschreibung

Die Erfindung betrifft eine Luftansaugvorrichtung für eine Brennkraftmaschine vor einem Luftfilter, mit einem im wesentlichen quaderförmigen, senkrecht stehenden, die Luft über eine seitliche Öffnung aufnehmenden Ansaugschnorchel mit integrierter Geräuschdämpfungseinrichtung, die eine Anzahl von im wesentlichen parallelen Luftleitblechen umfaßt, und einem seitlichen Wasserauslaß im unteren Bereich des Ansaugschnorchels.

Aus DE-OS 3 836 166 und DE-OS 3 942 595 sind Luftansaugvorrichtungen der vorgenannten Art bekannt, bei denen ein Wasserauslaß unterhalb der Eintrittsöffnung des Ansaugschnorchels vorgesehen ist. Durch den Wasserauslaß soll dem der Luftansaugvorrichtung nachgeordneten Luftfilter der Brennkraftmaschine Wasser bzw. Feuchtigkeit grundsätzlich ferngehalten werden. Die Wasseransaugung der Luftansaugvorrichtung ist jedoch in bezug auf unterschiedlich starke Motorisierung nicht optimal eliminiert. Dies gilt im besonderen für kleine Ansaugquerschnitte im Bereich der Eintrittsöffnung. Die bekannten Luftansaugvorrichtungen sind mithin allenfalls für Trockenluftfilter geeignet, nicht jedoch für Ölbad-Luftfilter.

Die GB-A-2 011 273 offenbart eine Luftansaugvorrichtung für eine Brennkraftmaschine mit einem Ansaugschnorchel, die eine Wasserabscheidevorrichtung umfaßt. Die Luft tritt von der Unterseite eines seitlich vorspringenden Rüssels der Ansaugvorrichtung ein und wird zunächst durch Leitbleche entgegen der Strömungsrichtung abgelenkt. Auf diese Weise soll sich in dem Luftstrom enthaltenes Wasser an der oberen Innenfläche des Rüssels ablagern.

Aufgabe der Erfindung ist die Schaffung einer Luftansaugvorrichtung der eingangs genannten Art, welche bei einfachem kompaktem Aufbau und zuverlässigem Betrieb nicht nur eine gute Geräuschdämmung aufweist, sondern bei der auch die Wasseransaugung eliminiert bzw. auf ein Minimum reduziert werden kann.

Diese Aufgabe wird erfindungsgemäß dadurch gelöst, daß der Geräuschdämpfungseinrichtung eine Wasserabscheidevorrichtung vorgeordnet ist, die mehrere schräg angeordnete wasserableitende Leitbleche aufweist, die zu dem seitlichen unteren Wasserauslaß radial zusammenlaufen und in die Ablaufrinnen integriert sind.

Ein Merkmal der Erfindung ist es, den seitlichen Wasserauslaß im Bereich des Schnorchelausgangs zum Luftfilter anzuordnen, wobei dem Wasserauslaß eine Wasserabscheidevorrichtung mit Leitblechen vorgeordnet ist.

Nach einem weiteren Merkmal ist die Wasserabscheidevorrichtung, welche zumindest ein schräges Leitblech mit einer Ablaufrinne aufweist, vor der Geräuschdämpfungseinrichtung angeordnet, wobei die Wasserabscheidevorrichtung direkt mit dem seitlichen Wasserauslaß in Verbindung steht.

Die Geräuschdämpfungseinrichtung ist insbesondere ein im Ansaugschnorchel integrierter Reflexionsdämpfer, welcher zwischen einer seitlichen Eintrittsöffnung des Ansaugschnorchels und einem unteren schnorchelinneren Ausgang zueinander abgestimmt angeordnete Luftleitbleche besitzt, die nach Zahl, Anordnung und Länge im Hinblick auf ein Geräuschdämpfungsoptimum einem bestimmten Brennkraftmaschinentyp angepaßt sind.

Die Wasserabscheidevorrichtung ihrerseits umfaßt zwei oder mehrere im Schnorchel schräg angeordnete Leitbleche die im Betrieb ein oder mehrere Luftumlenkungen bewirken, bevor die durch die Luftansaugvorrichtung strömende Luft zum Luftfilter gelangt.

Der Ansaugschnorchel ist vornehmlich quaderförmig ausgebildet und aufrechtstehend vor dem Luftfilter angeordnet. Die Feuchtigkeit schlägt sich als Kondensat an den Leitblechen nieder und wird durch Schwerkraft abgeleitet. Die Gesamtanordnung der Bleche ist so getroffen, daß sämtliches Wasser in Richtung Wasserauslaß zwangsgeführt ist. Im besonderen weisen Leitbleche der Wasserabscheidevorrichtung rinnenartige Abkantungen auf.

Durch die Erfindung kann mithin durch verschieden lange Luftführungen sowie entsprechenden Umlenkungen eine optimale Wasserausscheidung mit gleichzeitig geringer Geräuschentwicklung für unterschiedliche Motorleistungen bei Brennkraftmaschinen erreicht werden. Der vorzugsweise hinter dem Fahrerhaus eines Nutzfahrzeuges angeordnete Ansaugschnorchel, welcher auf der Fahrer- wie auf der Beifahrerseite oder auf beiden Fahrzeugseiten angeordnet sein kann, ist aus wenigen Teilen als kompakte Einheit mit optimalem Wasserabscheider und diversen Geräuschdämpfungsmaßnahmen einfach aufgebaut. Als Geräuschdämpfungsmaßnahme kann ferner an oberer Stelle in einem quaderförmigen Ansaugschnorchel zusätzlich ein Abzweigresonator vorgesehen sein. Ein hinter dem Fahrerhaus angeordneter Ansaugschnorchel mit seitlicher Ansaugöffnung bietet keine Schwingungsanregung der Fahrerhausoberfläche und trägt mithin nicht zur Erhöhung des Fahrerhausinnengeräusches bei. Dachaufbauten sind ohne weiteres möglich. Die Luftansaugvorrichtung kann auf unterschiedliche Motorausführungen (Sauger/Lader) und Motorleistungen optimal abgestimmt werden. Auch eine optimale Abstimmung auf die Art des eingebauten Luftfilters ist möglich. Die Luftansaugvorrichtung eignet sich mithin sowohl für Trocken- als auch für Ölbad-Luftfilter. Modulbauweise ist möglich, um im Austausch unterschiedlichen Motorausführungen und Motorleistungen Rechnung zu tragen. Der Ansaugschnorchel besitzt aufgrund der wenigen Einzelteile ein geringes Eigengewicht.

Die Erfindung wird nachfolgend anhand von Ausführungsbeispielen unter Bezugnahme auf die beigefügte Zeichnung näher erläutert; es zeigen:
- Fig. 1: in schematischer Rückansicht ein Nutzfahrzeug mit einer Luftansaugvorrichtung hinter dem Fahrerhaus auf einer Fahrzeugseite,
- Fig. 2: in schematischer Rückansicht ein Nutzfahrzeug mit einer Luftansaugvorrichtung auf beiden Fahrzeugseiten hinter einem Fahrerhaus,
- Fig. 3 und 4: einen senkrechten Schnitt einer Ausführungsform eines Ansaugschnorchels mit Detailquerschnitten längs der Linien B-B, C-C, D-D, E-E.

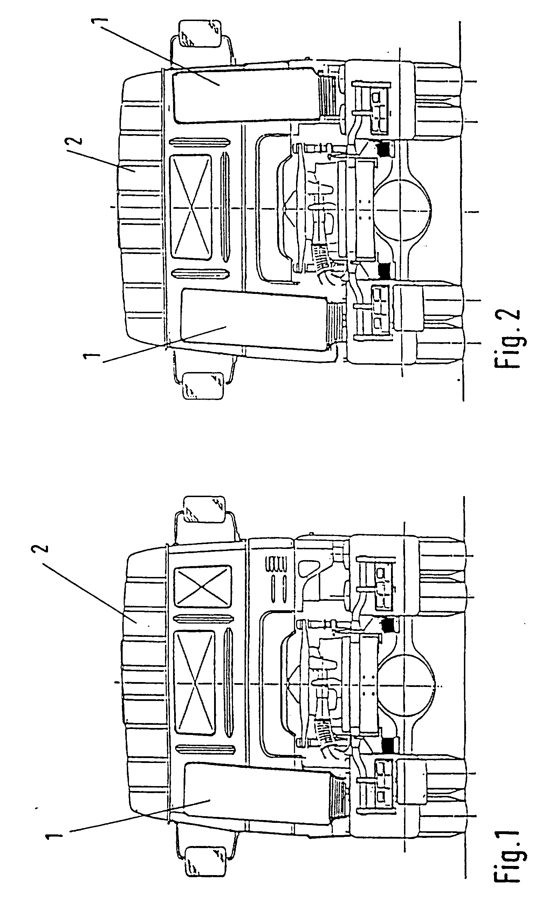

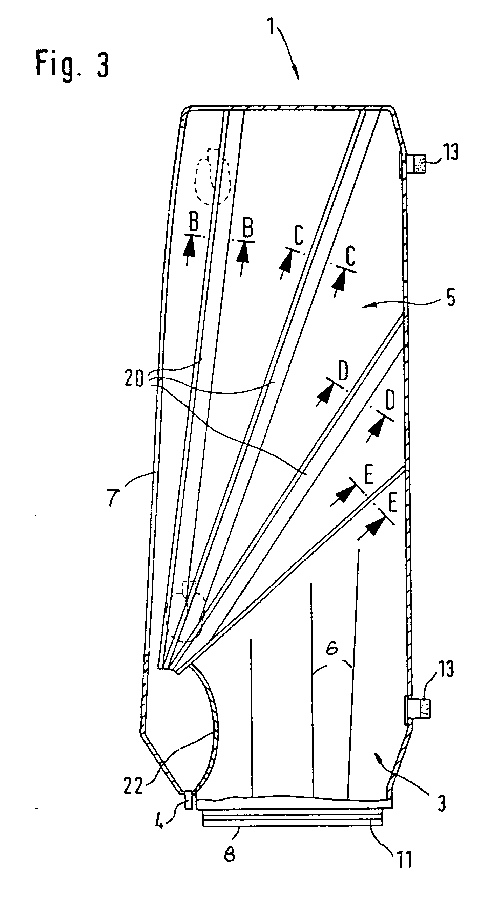

Eine Luftansaugvorrichtung für eine Brennkraftmaschine vor einem Luftfilter umfaßt einen Ansaugschnorchel 1 gemäß Fig. 3, welcher hinter einem Fahrerhaus 2 eines Nutzfahrzeugs auf der linken Fahrzeugseite montiert ist, wie dies in Fig. 1 gezeigt ist. Der Ansaugschnorchel 1 besitzt hierzu Befestigungsstellen 13 für eine geeignete fahrzeugfeste Befestigung.

Die Eintrittsöffnung 7 des Ansaugschnorchels 1 befindet sich an der linken Fahrzeugseite.

Gemäß Fig. 2 können zwei Ansaugschnorchel 1 einer Luftansaugvorrichtung auf beiden Fahrzeugseiten vorgesehen sein. Die Eintrittsöffnung 7 des rechten Ansaugschnorchels 1 befindet sich ebenfalls an der dortigen rechten Fahrzeugaußenseite.

Im besonderen ist der Ansaugschnorchel 1 gemäß Fig.3 quaderförmig ausgebildet und aufrechtstehend über einem (nicht veranschaulichten) Luftfilter angeordnet. Der Ansaugschnorchel 1 ist als sogenannter Reflexionsdämpfer konzipiert, der auch als Interferenzdämpfer bezeichnet wird. Als solcher besitzt er zwischen der seitlichen Eintrittsöffnung 7 des Ansaugschnorchels 1 und einem unterseitigen schnorchelinneren Ausgang 8 im wesentlichen parallel zueinander angeordnete Luftleitbleche 6, welche nach Zahl, Anordnung und Länge im Hinblick auf ein Geräuschdämpfungsoptimum einem bestimmten Brennkraftmaschinentyp angepaßt werden können. Im in Fig. 3 veranschaulichten Beispiel sind insgesamt drei Luftleitbleche,vorgesehen.

Das in Fig. 3 veranschaulichte Ausführungsbeispiel eines Ansaugschnorchels 1 besitzt eine Eintrittsöffnung 7, welche sich über den Großteil der Ansaugschnorchelhöhe erstreckt. Dadurch ist eine geringe Ansauggeschwindigkeit gegeben, wodurch auch wenig Wasser angesaugt wird.

Die in Fig. 3 gezeigte Ausführungsform umfaßt einen Ansaugschnorchel 1, bei welchem der Geräuschdämpfungseinrichtung 3 die Wasserabscheidevorrichtung 5 vorgeordnet ist. Die Wasserabscheidevorrichtung 5 steht direkt mit dem seitlichen Wasserauslaß 4 in Verbindung.

Die Wasserabscheidevorrichtung 5 umfaßt mehrere schräge wasserableitende Leitbleche 20, welche radial zum seitlichen unteren Wasserauslaß 4 hin konvergent verlaufen und in denen Ablaufrinnen 21 integriert ausgebildet sind. Die durch die wasserableitenden Leitbleche 20 strömende Luft wird mehrfach umgelenkt, bevor sie der Geräuschdämpfungseinrichtung 3 zugeführt wird.

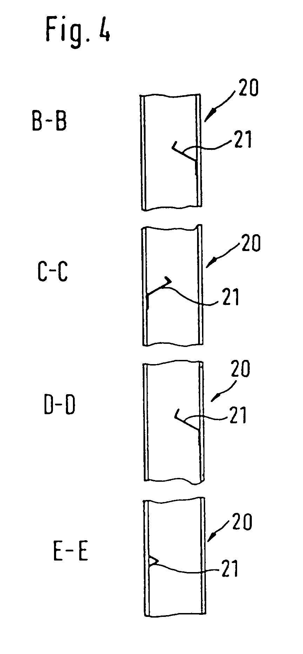

Einzelquerschnitte der verschiedenen Leitbleche 20 sind in der Fig. 4 dargestellt. Das in Fig. 3 links gezeigte gekrümmte Strömungsblech 22 ist wasserdicht.

Durch veränderung der Lufteintrittsöffnung 7 läßt sich die Ansauggeschwindigkeit derart beeinflussen, daß die Wasseransaugung auf ein Minimum reduziert wird. Die Wasserabscheidevorrichtung 5 schafft eine gezielte Umlenkung der Luftströmung dergestalt, daß die Wassertropfen in vorgesehenen Kanälen gesammelt und dem Wasserauslaß (4) zugeführt werden.

## Patentansprüche

1. Luftansaugvorrichtung für eine Brennkraftmaschine vor einem Luftfilter, mit einem im wesentlichen quaderförmigen, senkrecht stehenden, die Luft über eine seitliche Öffnung aufnehmenden Ansaugschnorchel (1) mit integrierter Geräuschdämpfungseinrichtung (3), die eine Anzahl von im wesentlichen parallelen Luftleitblechen umfaßt, und einem seitlichen Wasserauslaß (4) im unteren Bereich des Ansaugschnorchels, dadurch **gekennzeichnet,** daß der Geräuschdämpfungseinrichtung (3) eine Wasserabscheidevorrichtung (5) vorgeordnet ist, die mehrere schräg angeordnete wasserableitende Leitbleche (20) aufweist, die zu dem seitlichen unteren Wasserauslaß (4) radial zusammenlaufen und in die Ablaufrinnen (21) integriert sind.

## Claims

1. An air-intake device for an internal-combustion engine upstream of an air filter, having a substantially parallalepipedal, upright intake funnel (1) which draws air in through a lateral opening and which has an integrated silencing means (3), and which comprises a plurality of substantially parallel air baffles, and a lateral water outlet (4) in the lower region of the intake funnel, characterised in that a water-separating means (5) is disposed upstream of the silencing means (3) and has a plurality of obliquely arranged water-diverting baffles (20) which converge radially into a lateral lower water outlet (4) and which are integrated into drain channels (21).

## Revendications

1. Dispositif d'aspiration d'air pour un moteur à combustion interne en amont d'un filtre à air, comprenant un reniflard d'aspiration (1) essentiellement de forme rectangulaire, disposé debout, recevant l'air par une ouverture latérale, et ayant une installation d'isolation phonique (3), intégrée, comprenant un certain nombre de tôles de guidage d'air essentiellement parallèles et une sortie latérale d'eau (4) dans la zone inférieure du reniflard d'aspiration, caractérisé en ce que l'installation d'isolation phonique (3) est précédée par un séparateur d'eau (5) composé de plusieurs tôles de guidage (20), disposées inclinées, pour l'évacuation de l'eau, ces tôles se rejoignant radialement vers la sortie d'eau (4), latérale, inférieure, et ces tôles intégrant des goulottes d'évacuation (21).
